# EUROPÄISCHE PATENTANMELDUNG

(11) **EP 1 304 757 A2**
(43) Veröffentlichungstag der Anmeldung: **23.04.2003**
(21) Anmeldenummer: 02018751.4
(22) Anmeldetag: 22.08.2002
(51) Int. Cl.: H01M 8/24

(54) **Brennstoffzellenstapel**

(30) Priorität: 18.10.2001 DE 10151452
(71) Anmelder: Behr GmbH & Co., 70469 Stuttgart (DE)
(72) Erfinder: Damsohn, Herbert, Dr., 73773 Aichwald (DE); Kaiser, Wolfram, 79848 Bonndorf (DE); Krumbach, Karl-Gerd, Dipl.-Ing., 71576 Burgstetten (DE)

(57) **Zusammenfassung**

1. Brennstoffzellenstapel
2. Die Erfindung betrifft einen Brennstoffzellenstapel (1), welcher eine erste und eine zweite Endplatte (3) sowie dazwischen angeordnete, plattenförmige Brennstoffzellen aufweist, sowie eine Spannvorrichtung zum Verspannen der Brennstoffzellen zwischen den Endplatten (3), wobei im Brennstoffzellenstapel (1) ein Medium (4) zur Druckverteilung angeordnet ist. Dabei wird das Medium (4) im plastischen Zustand beim Zusammenbau des Brennstoffzellenstapels (1) eingebracht und das Medium (4) temporär plastisch verformbar ist.

## Beschreibung

Die Erfindung betrifft einen Brennstoffzellenstapel gemäß dem Oberbegriff des Anspruches 1, ein Zwischen- oder Endelement für einen Brennstoffzellenstapel sowie ein Verfahren zum Herstellen eines Brennstoffzellenstapels gemäß dem Oberbegriff des Anspruches 12.

Die Umwandlung von chemischer in elektrische Energie mittels Polymerelektrolyt-Brennstoffzellen stellt eine besonders effiziente und umweltfreundliche Methode zur Gewinnung von elektrischem Strom aus den Betriebsmedien Wasserstoff und Sauerstoff dar. Dabei finden zwei räumlich getrennte Elektrodenreaktionen statt, bei denen Elektronen freigesetzt bzw. gebunden werden:

H₂ => 2H⁺ + 2e⁻ (Anodische Reaktion)

2H⁺ + 2e⁻ + ½ O₂ => H₂O (Kathodische Reaktion)

Durch elektrische Verbindung der räumlich getrennten Reaktionszonen kann ein Teil der dabei umgesetzten Reaktionsenthalpie direkt als elektrischer Strom gewonnen werden.

Eine Polymerelektrolyt-Brennstoffzelle besteht im wesentlichen aus einer als Elektrolyt fungierenden Polymermembran, welche die Reaktanden Wasserstoff und Sauerstoff voneinander trennt und eine H⁺-Protonenleitfähigkeit aufweist, sowie aus zwei mit Katalysatormaterial belegten Elektroden, die unter anderem zum Abgriff des von der Brennstoffzelle erzeugten elektrischen Stroms erforderlich sind. Elektroden und Polymermembran werden gewöhnlich zu einer Membran-Elektroden-Anordnung (MEA) kompaktiert. Zur technischen Realisierung zweier durch den Elektrolyt voneinander getrennten, elektrisch über einen Außenleiter verbundenen Gasräume werden Bipolarplatten verwendet, die aus elektrisch leitfähigem Material bestehen und mit Gasverteilerstrukturen versehen sind, die den An- und Abtransport der Reaktionsedukte und Reaktionsprodukte ermöglichen. Somit besteht eine technische Brennstoff-Einzelzelle aus einer Membran-Elektroden-Anordnung, sowie zwei Bipolarplatten, die über Versorgungsanschlüsse mit den Betriebsmedien beaufschlagt und über die das Reaktionswasser abgeführt werden und die den beim Prozess auftretenden elektrischen Strom transportieren können.

Da die maximal erzielbare Zellenspannung einer Einzelzelle physikalisch begrenzt ist und im Anwendungsfall regelmäßig unter 1V, typischerweise im Bereich 0,5 bis 0,7V liegt, werden zur Herstellung höherer Spannungen und Leistungen mehrere Einzelzellen in Form einer elektrischen Serienschaltung zusammengeschaltet. Dieser im folgenden als Stapelaufbau bezeichnete Komplex besteht aus einer oder mehreren aufeinander gestapelten und in einer elektrischen Serienschaltung angeordneten, planaren Einzelzellen. Der Stapelaufbau wird an beiden Enden durch sogenannte Stromabnehmerplatten zur Abnahme des elektrischen Stroms versehen und durch eine - meist plattenförmige - und zum Stapelaufbau gehörende Isolierung elektrisch von den sogenannten Endplatten getrennt. Die Endplatten sind an beiden Enden des Stapelaufbaus angeordnet und meist durch Zuganker miteinander verbunden. Durch diese Zuganker ist die Aufbringung einer Verspannungskraft bzw. einer Druckkraft auf den Stapelaufbau möglich.

Zur Erzielung einer optimalen elektrischen Kontaktierung und Stromdichteverteilung über die aktive Zellfläche und für die einwandfreie Funktion der Dichtflächen zwischen zwei Grenzflächen ist eine möglichst homogene Kompression der aktiven Zellfläche zwischen den Bipolarplatten und zwischen benachbarten Einzelzellen und den Dichtflächen mittels der über die sogenannten Endplatten aufgebrachten Kräfte erforderlich. Herkömmliche Kompressionsvorrichtungen, die unter anderem mit Schrauben, Federn etc. arbeiten, werden bspw. in der US 6,190,793 beschrieben und erfordern zum Teil Endplatten erheblichen Gewichts und erheblicher Bauhöhe.

Durch Verspannung des an beiden Enden elektrisch isolierten Stapelaufbaus mit zwei Endplatten (in der Gesamtheit im folgenden als Brennstoffzellenstapel bezeichnet) ergibt sich bei den erforderlichen Zugkräften eine - je nach Dicke und Elastizität der Endplatte - teilweise erhebliche Durchbiegung der Endplatte, die zu einer inhomogenen mechanischen Druckspannungsverteilung über der Stapelaufbaufläche und damit mittelbar - durch Änderung der Kontaktierungsbedingungen zwischen Bipolarplatten und Membran-Elektroden-Anordnung einerseits und benachbarten Einzelzellen andererseits - zu einer insgesamt ungünstigen elektrischen Gesamt-Zellspannung führt.

Aus der DE 100 03 528 A1 ist daher eine Anordnung bekannt, bei der in einem Brennstoffzellenstapel ein inkompressibles Druckmedium, bspw. in Form von Wasser, Öl, Silikon, vorgesehen ist, in welchem eine isostatische Druckverteilung stattfindet. Eine derartige Anordnung lässt jedoch noch Wünsche offen.

Es ist Aufgabe der Erfindung, einen verbesserten Brennstoffzellenstapel zur Verfügung zu stellen.

Diese Aufgabe wird gelöst durch einen Brennstoffzellenstapel mit den Merkmalen des Anspruches 1, ein Zwischen- oder Endelement gemäß Anspruch 11 sowie durch ein Verfahren gemäß Anspruch 12. Vorteilhafte Ausgestaltungen sind Gegenstand der Unteransprüche.

Erfindungsgemäß wird bei einem Brennstoffzellenstapel ein zumindest während des Zusammenbaus der Brennstoffzelle temporär plastisch verformbares Medium zur Druckverteilung vorgesehen, damit auf die zwischen den Endplatten angeordneten Brennstoffzellen ein möglichst gleichmäßiger Druck wirkt und keine unerwünschten Verformungen auftreten. Das Medium, welches hierbei als Zwischen- oder Endelement (d.h. bspw. auch in eine Endplatte integriert) ausgebildet sein kann, wirkt daher als Druckverteilungskörper. Durch die Einbringung oder das Vorsehen des Mediums als ein im fertig zusammengebauten Zustand wirkender Druckverteilungskörper im Brennstoffzellenstapel ist es auf einfache Weise möglich, eine kostengünstige und gewichtsreduzierte Vorrichtung zur Verfügung zu stellen. Ferner ist der beanspruchte Bauraum gering, da keine formstabilen und daher dicken Endplatten erforderlich sind.

Vorzugsweise ist das Medium zwischen der ersten Endplatte und der hierzu nächstliegenden Brennstoffzelle und/oder zwischen der zweiten Endplatte und der hierzu nächstliegenden Brennstoffzelle angeordnet und/oder ist ein Teil der jeweiligen Endplatte. Dies ermöglicht eine auf einfache Weise zu bewerkstelligende, im wesentlichen gleichmäßige Druckverteilung über den gesamten Brennstoffzellenstapel.

Vorzugsweise handelt es sich bei dem Medium um ein beim Zusammenbau des Brennstoffzellenstapels verformbares Material, insbesondere um ein Fluid (flüssig oder gasförmig) oder aber einen Festkörper, der beim Zusammenbau zumindest plastisch verformbar ist. Dieses verformbare Material wird beim Zusammenbau des Brennstoffzellenstapels eingebracht. Ein derartiges Material kann die durch die Verspannung der Endplatten bspw. über Schrauben oder Zuganker aufgebrachten Kräfte homogen auf die Oberfläche der letzten Brennstoffzelle des Stapelaufbaus übertragen. Dadurch lassen sich sehr dünne Endplatten mit relativ großen Toleranzen ermöglichen, da die Krafteinleitung über den Druckverteilungskörper, d.h. das Medium, erfolgt.

Gemäß einer bevorzugten Ausführungsform härtet das Medium nach dem Zusammenbau zumindest teilweise oder vollständig aus oder erstarrt, wobei es seine Abmessungen, die es im Rahmen des Zusammenbaus erhält, beibehält und so die homogene Krafteinleitung im wesentlichen beibehalten wird. Ein vollständiges Aushärten bzw. Erstarren bietet den Vorteil der Auslaufsicherheit und der besseren Alterungsbeständigkeit.

Vorzugsweise ist das Medium in einem für das Medium im wesentlichen undurchlässigen Raum angeordnet. Hierbei ist insbesondere der Raum durch eine Hülle, ein anderes flexibles Behältnis oder durch die Endplatte, den Stapelaufbau und mindestens ein Dichtmittel begrenzt. Erfolgt eine Begrenzung des Raumes durch die Endplatte, ein angrenzendes Element und ein Dichtmittel, so wird vorzugsweise ein aushärtbares Fluid eingespritzt, und dieses härtet unter Aufrechterhaltung des gewünschten Anpressdruckes aus.

Vorzugsweise handelt es sich beim Medium um ein Gießharz, einen Kunststoff oder ein Kunststoffgemisch, ein Metall oder eine Metalllegierung. Insbesondere kommen Epoxydharz mit einem Bindemittel, Zinn und Blei in Frage. Besonders vorteilhaft ist hierbei die Anordnung von Epoxydharz mit einem Bindemittel in einem Kunststoffbeutel als Hülle, welcher im unausgehärteten Zustand des Epoxydharzes eingelegt und verspannt wird und das Epoxydharz danach aushärtet. Beim Medium kann es sich um einen Isolator handeln, der die Endplatten vom Stapelaufbau elektrisch trennt.

Vorzugsweise ist das Medium temperaturbeständig bis 300°C und/oder alterungs- und kriechbeständig, wobei die Formänderung durch Alterung oder Kriechen vorzugsweise kleiner als 3%, insbesondere kleiner als 1% in 10 Jahren ist.

Ist eine Hülle oder ein flexibles Behältnis für das Medium vorgesehen, so ist die Hülle bzw. das flexible Behältnis vorzugsweise aus Kunststoff, einem organischen, natürlichen Material oder Metall.

Zum Zusammenbau eines erfindungsgemäßen Brennstoffzellenstapels, wird zwischen der ersten Endplatte und der hierzu nächstliegenden Brennstoffzelle und/oder zwischen der zweiten Endplatte und der hierzu nächstliegenden Brennstoffzelle ein Medium angeordnet, wobei das Medium in plastischem Zustand beim Zusammenbau oder nach der Vormontage eingebracht wird. Dabei können neben dem Medium durchaus noch weitere Elemente zwischen der jeweiligen Endplatte und der hierzu nächstliegenden Brennstoffzelle angeordnet sein, wie beispielsweise ein isolierendes Element. Alternativ weist das Medium nach dem Einbringen zumindest temporär einen plastischen Zustand auf, bspw. infolge einer Wärmebehandlung und/oder einer chemischen Reaktion.

Vorzugsweise wird das Medium in Fluidform bei einem Druck zwischen 0 und 100 bar eingebracht. Vorzugsweise wird das Medium im Anschluss an den Zusammenbau zumindest teilweise ausgehärtet oder erstarrt.

Vorzugsweise ist das Medium vorgeformt, so dass bei einer Wärmebehandlung zur Erreichung eines plastischen Zustands nur der Randbereich erwärmt werden muss, bis eine ausreichende Verformung und somit auch eine gleichmäßige Druckverteilung zwischen dem Medium und der entsprechenden Endplatte erfolgt ist.

Im folgenden wird die Erfindung anhand mehrerer Ausführungsbeispiele unter Bezugnahme auf die Zeichnung im einzelnen erläutert. In der Zeichnung zeigen:
- **Fig. 1**: eine schematische Ansicht eines Brennstoffzellenstapels gemäß dem ersten Ausführungsbeispiel,
- **Fig. 2**: eine schematische Ansicht eines Brennstoffzellenstapels gemäß dem zweiten Ausführungsbeispiel,
- **Fig. 3**: eine schematische Ansicht eines Brennstoffzellenstapels gemäß dem dritten Ausführungsbeispiel vor der Wärmebehandlung,
- **Fig. 4**: eine schematische Ansicht des Brennstoffzellenstapels gemäß dem dritten Ausführungsbeispiel nach der Wärmebehandlung,
- **Fig. 5**: eine schematische Ansicht eines Brennstoffzellenstapels gemäß dem vierten Ausführungsbeispiel vor der Wärmebehandlung,
- **Fig. 6**: eine schematische Ansicht des Brennstoffzellenstapels gemäß dem vierten Ausführungsbeispiel nach der Wärmebehandlung,
- **Fig. 7**: eine schematische Ansicht eines Brennstoffzellenstapels gemäß dem fünften Ausführungsbeispiel vor der Wärmebehandlung und
- **Fig. 8**: eine schematische Ansicht des Brennstoffzellenstapels gemäß dem fünften Ausführungsbeispiel nach der Wärmebehandlung.

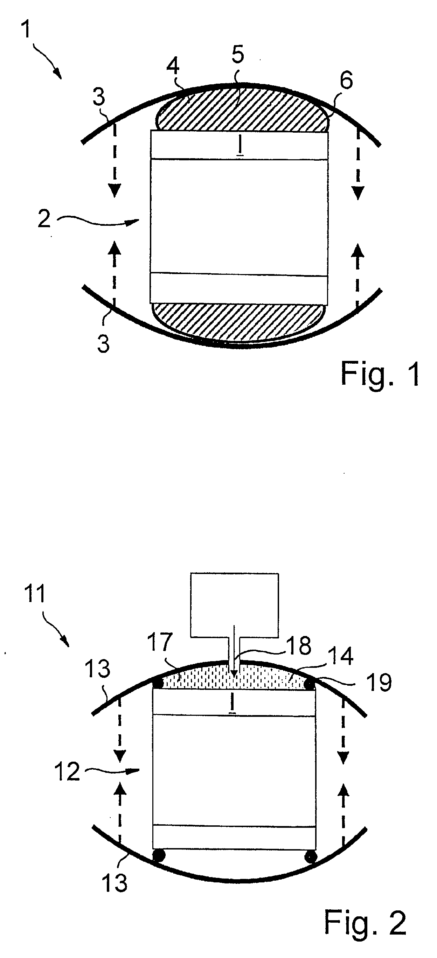

**Fig. 1** zeigt als erstes Ausführungsbeispiel einen vereinfacht dargestellten Brennstoffzellenstapel 1, der einen Stapelaufbau 2 aus nicht im einzelnen dargestellten planaren Einzel-Brennstoffzellen und mit einer an den beiden Enden des Stapelaufbaus 2 integrierten, elektrischen Isolation I und zwei Endplatten 3 aufweist. Die Endplatten 3 werden mit Hilfe von durch Pfeile angedeutete Zuganker miteinander verspannt.

Damit von den Endplatten 3 aus eine möglichst gleichmäßig verteilte Kraft auf den Stapelaufbau 2 wirkt, ist auf beiden Seiten zwischen dem Stapelaufbau 2 und der jeweiligen Endplatte 3 ein Medium 4 zur optimierten Druckverteilung vorgesehen. Beim Medium 4 handelt es sich um ein Epoxydharz 5 mit Binder, das in eine Hülle 6, im vorliegenden Fall in einen Kunststoffbeutel, gefüllt ist. Hierbei wird die Hülle 6 mit dem noch unausgehärtetem Epoxydharz 5 beim Zusammenbau des Brennstoffzellenstapels 1 eingelegt und mit Hilfe der Zuganker verspannt. Durch den flüssigen Aggregatszustand des Mediums 4 passt sich das Medium 4 optimal an die Oberflächen der einzelnen Komponenten, d.h. den Stapelaufbau 2 und die jeweilige Endplatte 3 an und erzeugt eine homogene Druckspannungsverteilung über die gesamte Anlagefläche an den Stapelaufbau 2 sowie die Endplatte 3. Nach dem Aushärten des Epoxydharzes 5 liegt ein auslaufsicheres und alterungsbeständiges Medium 4 vor, das eine sehr homogene Verpressung des Stapelaufbaus 2 bei geringen Anforderungen an die Steifheit der Endplatten 3 ermöglicht.

Im folgenden wird unter Bezugnahme auf **Fig. 2** ein zweites Ausführungsbeispiel beschrieben, bei dem gleiche oder gleichwirkende Teile mit um 10 höheren Bezugszeichen versehen sind.

Hierbei ist ein Brennstoffzellenstapel 11, der einen Stapelaufbau 12 aus nicht im einzelnen dargestellten planaren Einzel-Brennstoffzellen und mit einer an den Enden des Stapelaufbaus 12 integrierten, elektrischen Isolation I und zwei Endplatten 13 aufweist, mit Hilfe von durch Pfeile angedeutete Zuganker verspannt.

Damit auch bei diesem Ausführungsbeispiel von den Endplatten 13 aus eine möglichst gleichmäßig verteilte Kraft auf den Stapelaufbau 12 wirkt, ist auf beiden Seiten zwischen dem Stapelaufbau 12 und der jeweiligen Endplatte 13 ebenfalls ein Medium 14 zur optimierten Druckverteilung vorgesehen. Beim Medium 14 handelt es sich um Zinn 17. Beim Zusammenbau und Verspannen der Endplatten 13 wird unter Druck das flüssige Zinn 17 durch eine Öffnung 18 in der jeweiligen Endplatte 13 in den Raum zwischen dem Stapelaufbau 12 und der Endplatte 13 gefüllt. Damit ein seitliches Auslaufen des flüssigen Zinns 17 verhindert wird, sind Dichtungen 19 im äußeren Bereich des Stapelaufbaus 12 vorgesehen. Der Druck wird bis zum Erstarren des Zinns 17 aufrechterhalten. Durch das Erstarren wird die Öffnung 18 durch das hierin befindliche Zinn 17 geschlossen. Nach dem Erstarren des Zinns 17 liegt ein auslaufsicheres und alterungsbeständiges Medium 14 vor, das ebenfalls eine sehr homogene Verpressung des Stapelaufbaus 12 bei geringen Anforderungen an die Steifheit der Endplatten 13 ermöglicht und die gleichen Vorteile wie das erste Ausführungsbeispiel bietet.

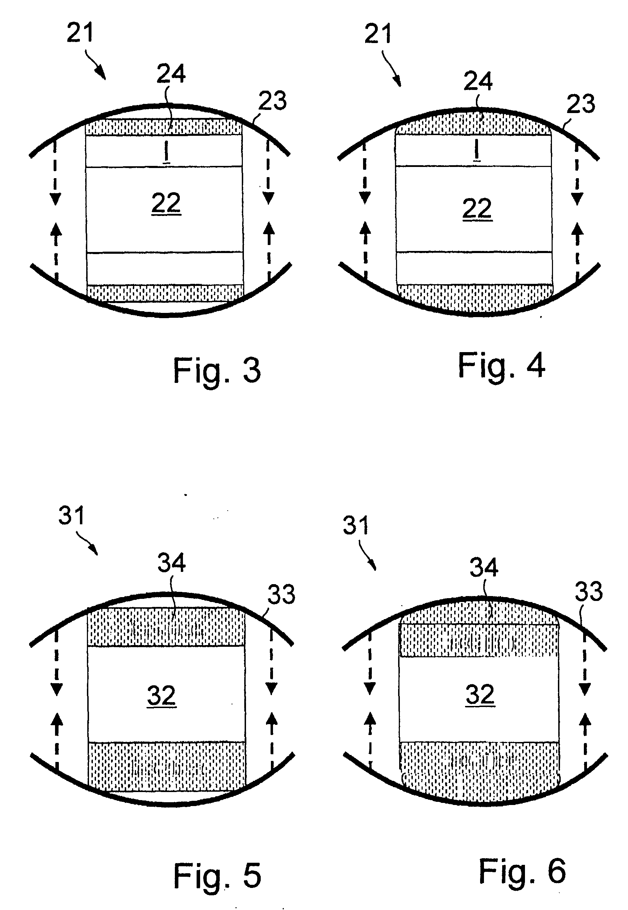

Im folgenden wird unter Bezugnahme auf **Fig. 3 und 4** ein drittes Ausführungsbeispiel beschrieben, bei dem gleiche oder gleichwirkende Teile mit um 20 höheren Bezugszeichen gegenüber dem ersten Ausführungsbeispiel versehen sind. Auch bei diesem Ausführungsbeispiel sind die Verformungen übertrieben dargestellt.

Hierbei ist, wie in Fig. 3 dargestellt, ein Brennstoffzellenstapel 21, der einen Stapelaufbau 22 aus nicht im einzelnen dargestellten planaren Einzel-Brennstoffzellen und mit einer an den Enden des Stapelaufbaus 22 integrierten, elektrischen Isolation I und zwei Endplatten 23 aufweist, mit Hilfe von durch Pfeile angedeutete Zuganker verspannt.

Nach dem Zusammenbau des Brennstoffzellenstapels 21 wird dieser einer Wärmebehandlung unterzogen, während der das Medium 24 zumindest im Bereich der Endplatten 23 einen plastischen Zustand einnimmt und so verformt wird, dass eine optimale Druckverteilung zwischen dem Medium 24 und der entsprechenden Endplatte 23 erfolgt. Nach erfolgter thermischplastischer Verformung wird die Wärmebehandlung beendet, das Medium 24 erstarrt wieder und nimmt die in Fig. 4 dargestellte Form ein.

Gemäß einer nicht dargestellten alternativen Ausführungsform kann das Medium bereits vorgeformt sein, so dass sich der Zeit- und Energieaufwand für die Wärmebehandlung verringert und das Medium nicht notwendigerweise vollständig einen plastischen Zustand einnehmen muss.

Im folgenden wird unter Bezugnahme auf **Fig. 5 und 6** ein viertes Ausführungsbeispiel beschrieben, bei dem gleiche oder gleichwirkende Teile mit um 30 höheren Bezugszeichen gegenüber dem ersten Ausführungsbeispiel versehen sind. Auch bei diesem Ausführungsbeispiel sind die Verformungen übertrieben dargestellt.

Hierbei ist, wie in Fig. 5 dargestellt, ein Brennstoffzellenstapel 31, der einen Stapelaufbau 32 aus nicht im einzelnen dargestellten planaren Einzel-Brennstoffzellen und mit einer an den Enden des Stapelaufbaus 32 integrierten elektrischen Isolation und zwei Endplatten 33 aufweist, mit Hilfe von durch Pfeile angedeutete Zuganker verspannt. Hierbei besteht, im Gegensatz zum dritten Ausführungsbeispiel, das Medium 34 selbst aus einem als Isolator geeigneten Material, so dass keine zusätzliche Isolation erforderlich ist. Auch bei diesem Ausführungsbeispiel erfolgt eine Anpassung der Oberfläche des Mediums 34 an die Endplatten 33 und den Stapelaufbau 32 im Rahmen einer Wärmebehandlung.

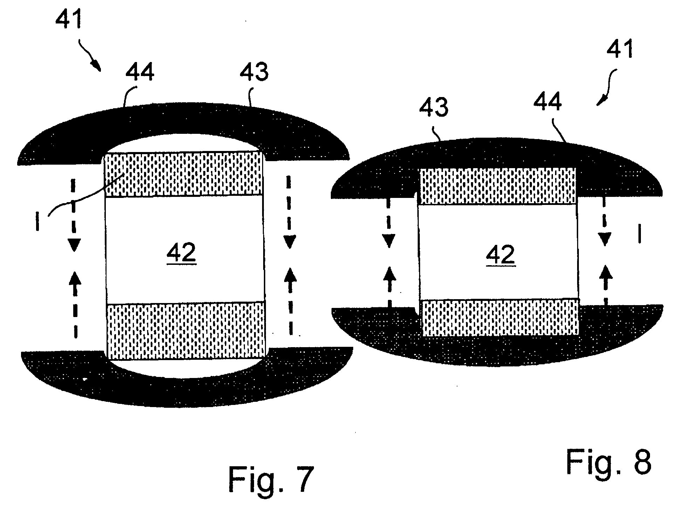

Im folgenden wird unter Bezugnahme auf **Fig. 7 und 8** ein fünftes Ausführungsbeispiel beschrieben, bei dem gleiche oder gleichwirkende Teile mit um 40 höheren Bezugszeichen gegenüber dem ersten Ausführungsbeispiel versehen sind. Auch bei diesem Ausführungsbeispiel sind die Verformungen übertrieben dargestellt.

Hierbei ist ein Brennstoffzellenstapel 41, der einen Stapelaufbau 42 aus nicht im einzelnen dargestellten planaren Einzel-Brennstoffzellen und mit einer an den Enden des Stapelaufbaus 42 integrierten elektrischen Isolation I und zwei Endplatten 43 aufweist, mit Hilfe von durch Pfeile angedeutete Zuganker verspannt. Hierbei übernehmen, im Gegensatz zu den vorangegangenen Ausführungsbeispielen, die im Kontaktbereich zum Stapelaufbau 42 während des Verspannungsvorgangs lokal in einen plastischen Zustand überführten Endplatten 43 die Funktion der Druckverteilung, so dass die Endplatten 43 als Medium 44 dienen. Dabei sind die Endplatten 43 beim Zusammenbau in einem dem Stapelaufbau 42 zugewandten Bereich plastisch verformbar.

Gemäß einer nicht näher dargestellten Variante zum fünften Ausführungsbeispiel ist das Material der Endplatten so gewählt, dass die Endplatten die Funktion der elektrischen Isolation übernehmen und auf eine zusätzliche Isolation verzichtet werden kann.

### Bezugszeichenliste

1, 11, 21, 31, 41 Brennstoffzellenstapel
2, 12, 22, 32, 42 Stapelaufbau
3, 13, 23, 33, 43 Endplatte
4, 14, 24, 34, 44 Medium
5 Epoxydharz
6 Hülle
17 Zinn
18 Öffnung
19 Dichtung
I Isolator

## Patentansprüche

1. Brennstoffzellenstapel, welcher eine erste und eine zweite Endplatte (3;13; 23; 33; 43) sowie dazwischen angeordnete, planaren Brennstoffzellen aufweist, sowie eine Spannvorrichtung zum Verspannen der Brennstoffzellen zwischen den Endplatten (3; 13; 23; 33; 43), wobei im Brennstoffzellenstapel (1; 11; 21; 31; 41) ein Medium (4; 14; 24; 34; 44) zur Druckverteilung angeordnet ist, **dadurch gekennzeichnet, dass** das Medium (4; 14; 24; 34; 44) temporär plastisch verformbar ist.

2. Brennstoffzellenstapel nach Anspruch 1, **dadurch gekennzeichnet, dass** das Medium (4; 14; 24; 34) zwischen der ersten Endplatte (3; 13; 23; 33) und der hierzu nächstliegenden Brennstoffzelle und/oder zwischen der zweiten Endplatte (3; 13; 23; 33) und der hierzu nächstliegenden Brennstoffzelle angeordnet und/oder dass das Medium (44) ein Teil der entsprechenden Endplatte (43) ist.

3. Brennstoffzellenstapel nach einem der vorstehenden Ansprüche, **dadurch gekennzeichnet, dass** das Medium (4; 14; 24; 34; 44) ein zumindest teilweise oder vollständig ausgehärtetes oder erstarrtes Material ist.

4. Brennstoffzellenstapel nach einem der vorstehenden Ansprüche, **dadurch gekennzeichnet, dass** das Medium (4; 14; 24; 34; 44) in einem für das Medium (4; 14; 24; 34; 44) im wesentlichen undurchlässigen Raum angeordnet ist.

5. Brennstoffzellenstapel nach Anspruch 4, **dadurch gekennzeichnet, dass** der Raum durch eine Hülle (6), ein flexibles Behältnis oder durch die Endplatte (13), ein angrenzendes Element und mindestens ein Dichtmittel (19) begrenzt ist.

6. Brennstoffzellenstapel nach einem der vorstehenden Ansprüche, **dadurch gekennzeichnet, dass** das Medium (4; 14; 24; 34; 44) ein Gießharz (5), Kunststoff oder Kunststoffgemisch, ein Metall (17) oder eine Metalllegierung ist.

7. Brennstoffzellenstapel nach einem der vorstehenden Ansprüche, **dadurch gekennzeichnet, dass** das Medium (34) ein elektrischer Isolator (I) ist.

8. Brennstoffzellenstapel nach einem der vorstehenden Ansprüche, **dadurch gekennzeichnet, dass** das Medium (4; 14; 24; 34; 44) temperaturbeständig bis 300°C ist.

9. Brennstoffzellenstapel nach einem der vorstehenden Ansprüche, **dadurch gekennzeichnet, dass** das Medium (4; 14; 24; 34; 44) alterungs- und kriechbeständig ist.

10. Brennstoffzellenstapel nach Anspruch 5, **dadurch gekennzeichnet, dass** die Hülle (6) oder das flexible Behältnis aus Kunststoff, einem organischen, natürlichen Material oder Metall ist.

11. Zwischen- oder Endelement für einen Brennstoffzellenstapel (1; 11; 21; 31; 41) gemäß einem der vorstehenden Ansprüche mit einem Medium (4; 14; 24; 34; 44).

12. Verfahren zum Zusammenbau eines Brennstoffzellenstapels (1; 11; 21; 31; 41), welcher eine erste und eine zweite Endplatte (3; 13; 23; 33; 43) sowie dazwischen angeordnete Brennstoffzellen aufweist, sowie eine Spannvorrichtung zum Verspannen der Brennstoffzellen, **dadurch gekennzeichnet, dass** zwischen der ersten Endplatte (3; 13; 23; 33) und der hierzu nächstliegenden Brennstoffzelle und/oder zwischen der zweiten Endplatte (3; 13; 23; 33) und der hierzu nächstliegenden Brennstoffzelle ein Medium (4; 14; 24; 34) angeordnet wird und/oder dass die erste Endplatte (43) und/oder die zweite Endplatte (43) einen Bereich mit einem Medium (44) aufweist, wobei das Medium (4; 14; 24; 34; 44) in plastischem Zustand eingebracht wird und/oder nach dem Einbringen temporär einen plastischen Zustand aufweist.

13. Verfahren nach Anspruch 12, **dadurch gekennzeichnet, dass** das Medium (4; 14) bei einem Druck zwischen 0 und 100 bar eingebracht wird.

14. Verfahren nach Anspruch 12 oder 13, **dadurch gekennzeichnet, dass** das Medium (4; 14; 44) zumindest teilweise ausgehärtet wird oder erstarrt.

15. Verfahren nach Anspruch 13, **dadurch gekennzeichnet, dass** das Medium (4; 14; 24; 34; 44) temporär erhitzt wird.

16. Verfahren nach einem der Ansprüche 12 bis 15, **dadurch gekennzeichnet, dass** das Medium (24; 34; 44) vorgeformt ist.
